# EUROPEAN PATENT APPLICATION

(11) **EP 2 724 827 A1**
(43) Date of publication of application: **30.04.2014**
(21) Application number: 13190029.2
(22) Date of filing: 24.10.2013
(51) Int. Cl.: B26D 3/16, B23D 21/10, B23B 5/16

(54) **Tool for working the end of a pipe**

(30) Priority: 24.10.2012 IT VI20120282
(71) Applicant: Tapel di Mastromatteo Ciro & C. S.a.s, 36043 Camisano Vicentino (IT)
(72) Inventor: Mastromatteo, Ciro, 36043 Camisano Vicentino ( VI) (IT)
(74) Representative: Autuori, Angelo

(57) **Abstract**

A tool for working the end **(F)** of a pipe **(T)** for the transport of fluids with smooth surface, comprising a support structure **(2)** defining a second axis **(Z)** and at least one couple of substantially C-shaped jaw elements **(3, 4)** with concavities reciprocally facing each other in order to define a seat **(S)** for housing the pipe **(T).** The tool includes also a first circular blade element **(12)** and a blade holder element **(20)** sliding along a third axis (**Z'**) substantially parallel to said second axis **(Z)** and substantially orthogonal to the first axis **(X)** defined by the pipe **(T)** on which the same circular blade element **(12)** is mounted. The blade holder element **(20)** includes also at least a second elongated blade element **(19, 19')** usable as alternative to the first circular blade element **(12).** The second elongated blade element **(19, 19')** defines a fourth axis **(X')** substantially parallel to the first axis **(X)** ansd substantially coinciding with the rotation axis of the circular blade element **(12).** The second elongated blade element **(19, 19')** includes an outer wall **(22)** comprising a first cutting edge **(23)** intended to come in contact with the pipe **(T)** in order to countersink the inner edge and a second cutting edge **(23')** susceptible to come in contact with the pipe **(T)** in order to chamfer the outer wall.

## Description

### Field of the invention

The present invention is generally applicable in the technical field of the civil and industrial installations, and particularly relates to a tool for working the end of a plumbing pipe.

### Prior art

It is known that civil and industrial plumbing include pipes for transporting liquids, gases and air. These plumbing pipes are mainly of two types, multilayer or metal ones.

The multilayer pipes have an inner layer in plastic material, generally PVC, an intermediate layer in metal material, generally aluminum, and an outer protective layer in plastic material, generally PVC.

The metal pipes include an outer layer in metal material, generally steel or copper, and an outer protective layer in plastic material, generally PVC.

In order to allow the coupling of such pipes to the various parts of the plumbing, the pipes are to be worked to prepare them for the coupling with the corresponding fittings. In particular, the multilayer and metal plumbing pipes are coupled with the corresponding fittings by compressing or by pressing the letter onto the pipes.

The working of the multilayer plumbing pipes mainly includes the pipe cutting, the beveling of the inner layer and the countersinking of the outer layer. On the other hand, the working of the metal plumbing pipes includes mainly the pipe cutting, the removal of possible burrs from the inner edge or from the outer edge and the peeling of the outer protective PVC layer.

For each type of pipe, different tools are used for the various above-mentioned operations.

Concerning the multilayer plumbing pipes, cutters are used for cutting the pipes, as e.g. taught by the document DE10024083, which cutters act by compressing the outer circumferential wall of the pipe, so as to cause a radial deformation of the pipe edge.

In order to restore the pipe to the original shape, a calibrator tool is used, as taught by the European patent EP0922518, which allows the beveling and the countersinking of the pipe edges too.

Concerning the metal plumbing pipes, pipe cutters are used for cutting the pipes, which tools carry out, besides cutting, also the countersinking of the outer edge, as e.g. taught by the British document GB1443622.

The beveling of the inner edge of the pipe is carried out by suitable beveling tools, as e.g. taught by the German document DE29608602. Finally, in order to remove the plastic cover from the end of the pipes with smooth surface, suitable peeling tools are used, as e.g. described in the European patent EP1342519.

It is self-evident that an operator, in order to prepare the pipe for the coupling with the corresponding fitting, has to use plenty of tools, causing a waste of energies, time and money. Moreover, most of such tools are suitable for working only pipes with a predetermined diameter, thus forcing an operator to be equipped, for every tool type, with a series of different measures, leading to additional costs.

Further, the peeling tools to remove the plastic cover from the outer smooth surface of the ends of metal pipes may also easily cause grooves and undesired scores on the outer metal smooth surface of the pipe. Such scores cause or may cause fluid leakages in correspondence of the coupling zones with the fitting.

Additional tools suitable for working pipes with smooth surface are known from the documents JPS5657794U, US3608194 e US4402136.

### Summary of the invention

It is an object of the present invention to at least partially overcome the above mentioned drawbacks, by providing a tool for working the end of a plumbing pipe for civil and industrial plumbing that is highly effective, easy to manufacture and low cost.

Another object of the present invention is to provide a tool having extremely low bulkiness.

Another object of the present invention is to provide a tool making as much as possible easy the operation of an operator.

Another object is to provide a tool allowing to work pipes of different types and diameters in a easy and simple way.

These and other objects, as better explained hereafter, are fulfilled by a tool for working the end of a plumbing pipe having one or more of the features hereby described and/or shown and/or claimed.

Advantageous embodiments of the invention are defined in accordance with the dependent claims.

### Brief description of the drawings

Further features and advantages of the invention will appear more evident upon reading the detailed description of a preferred, non-exclusive embodiment of a a tool for working the end of a plumbing pipe having smooth surface for the transport of fluids according to the invention, which is described as non limiting example with the help of the annexed drawings, in which:
**FIG. 1** is a side view of an embodiment of the tool according to the invention with the jaw elements **3, 4** in the reciprocally distal position;
**FIG. 2** is an enlarged view of a particular of the tool of FIG.1;
**FIG. 3** is a side view of the tool of FIG.1, with the jaw elements **3, 4** in the reciprocally proximal position and with a first embodiment of plumbing pipe **T** in the seat **S;**
**FIG. 4** is a side view of the tool of FIG.1, with the jaw elements **3, 4** in the reciprocally proximal position and with a second embodiment of plumbing pipe **T** in the seat **S;**
**FIG. 5** is a perspective view of some particulars of the tool of FIG.1;
**FIG.** 6 is a perspective view of further particulars of the tool of FIG.1;
**FIG. 7** is a perspective view of further particulars of the tool of FIG.1;
**FIG. 8** is a perspective exploded view of the particular of FIG.7;
**FIG. 9** is a perspective view of a first embodiment of the elongated blade element **19,** with some enlarged particulars in **FIG. 9a****;**
**FIG. 10** is a perspective view of a second embodiment of the elongated blade element **19';**
**FIG. 11** is a top view of a third embodiment of the elongated blade element **19;**
**FIG. 12** is a side view of the tool of FIG.1 during the pipe cutting operation;
**FIG. 13** is a top view of the tool of FIG.1 during the countersinking operation on the outer edge of the pipe, with some enlarged particulars in **FIG. 13a****;**
**FIG. 14** is a top view of the tool of FIG.1 during the beveling operation of the inner edge of the pipe, with some enlarged particulars in **FIG. 14a****.**

### Detailed description of some preferred embodiments

With reference to the cited figures, the tool **1** is particularly useful for working the end **F** of a plumbing pipe **T** with smooth surface for the transport of fluids in the liquid or gas state and, in particular, is useful for the preparation of the pipe **T** for the coupling with the corresponding fittings.

The pipe **T,** *per se* known, defines a first axis **X** and may be a multilayer pipe including at least one inner layer in contact with the fluid to be transported and compatible with it, one outer protective layer **E** in polymer material for protecting the pipe from the external environment and, possibly, one or more intermediate metal layers.

On the other hand, the pipe **T** may be a metal pipe, with the inner layer in metal material, generally steel or copper, and an outer protective layer **E** in polymer material.

For the coupling with a fitting, the plumbing pipe **T** shall be cut at the desired length, the outer protective layer **E** shall be removed from the end and the edge thereof shall be worked, for example countersunk or beveled.

The tool **1,** suitable for carrying out all the above mentioned operations, may comprise a support structure **2,** defining a second axis **Z,** and at least one couple of substantially C-shaped jaw elements **3, 4** with reciprocally facing concavities to define a seat **S** for retaining the pipe **T.** In particular the jaw elements **3, 4** are mounted on the support structure **2** to slide along the second axis **Z** between a reciprocally proximal position in which they retain the pipe **T** into the seat **S** and a reciprocally distal position in which the pipe **T** is removable from the seat **S.**

Suitably, the jaw elements **3, 4** may be configured in such a manner that the axis **X** of the pipe **T** retained in the seat **S** can substantially be orthogonal with respect to the axis **Z.** Once in this position, the pipe **T** can be worked in order to prepare it for the coupling with the corresponding fitting.

In the embodiment shown in the attached figures, the tool **1** may comprise a threaded column **5** defining the second axis **Z** and having a first and second portion **6, 7** with opposite thread of equal pitch **P.** Every jaw element **3, 4** is operatively coupled with a respective portion **6, 7** of the threaded column **5** in order to allow the operator to move the jaw elements **3, 4** between the reciprocally distal and proximal positions by rotation of the threaded column **5** around the second axis **Z.** Besides this, a sliding bar **8** substantially parallel to the second axis **Z** is provided. As shown in the attached figures, the tool **1** according to the invention may have a second sliding bar **9,** this is substantially parallel to the second axis **Z.** At least one of the jaw elements **3, 4** may be provided with calibrated holes **10, 11** designed to slidably receive the sliding bars **8, 9** in order to allow the traversing along the second axis **Z.**

Thanks to this configuration, the tool **1** can work pipes having a diameter comprised in a quite wide range, so as to avoid the operator's need to use a high number of tools, at worst one tool for each pipe diameter.

The tool 1 according to the invention comprises a circular blade element **12** movably mounted on one of the jaw elements, for example the one indicated with **3.** The first circular blade element **12** slides along an axis **Z' guided** by the jaw element **3,** and in particular by the tubular portion **26** thereof. Advantageously, when the pipe **T** is retained in the seat **S,** the first circular blade element **12** moves between a first rest position spaced apart from the pipe **T** and at least one first working position in contact with the pipe to cut it and/or to radially carve the external plastic layer **E** thereof which is to be removed.

The tool **1** further comprises means **14** for controlling the sliding of said circular blade element **12.** The first means **14** for controlling such movement may selectively move the first blade element **12** towards the first working position in contact with the pipe **T** and may adjust its distance from the pipe T when the latter is in its seat **S.**

The tool **1** according to the invention further comprise grasp means **16** suitable for allowing a user to grab the tool itself and to slidingly move it along the first axis **X** and/or by rotation around the same axis. In this way, when the first blade element **12** is in the working position and the pipe **T** is retained in the seat **S,** the pipe **T** is cut at the desired length through a rotary movement.

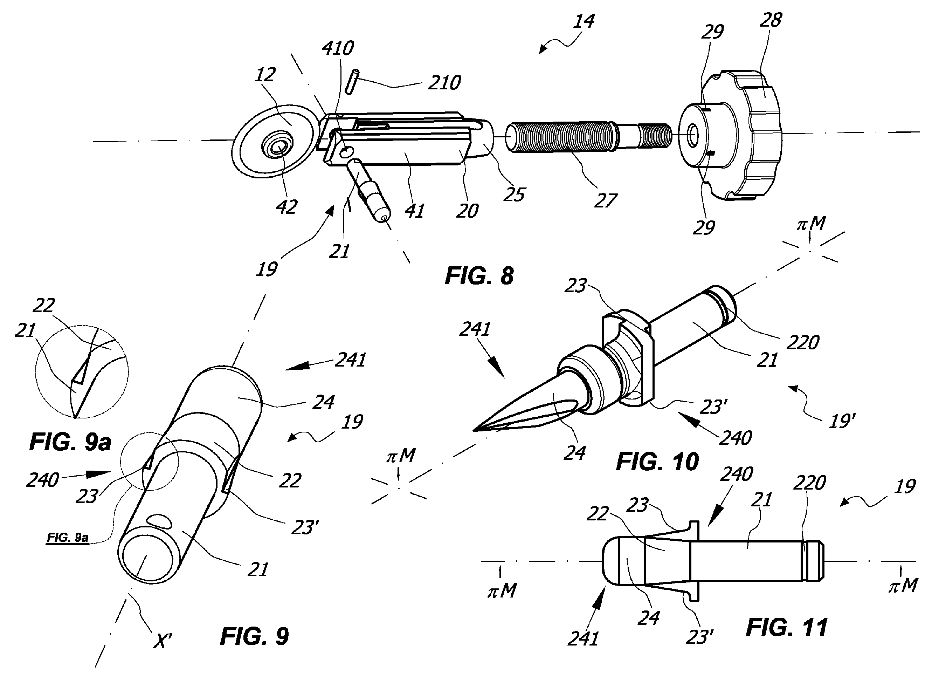

Conveniently, the tool **1** according to the invention comprises at least one second elongated blade element. In the present document, where not otherwise specified, **19** indicates the elongated blade element particularly suitable for working multilayer pipes **T,** as shown for example in the embodiments of the FIGS. 9 or 11, while **19'** indicates the elongated blade element particularly suitable for working the metal pipes **T,** as shown for example in the embodiment of FIG. 10.

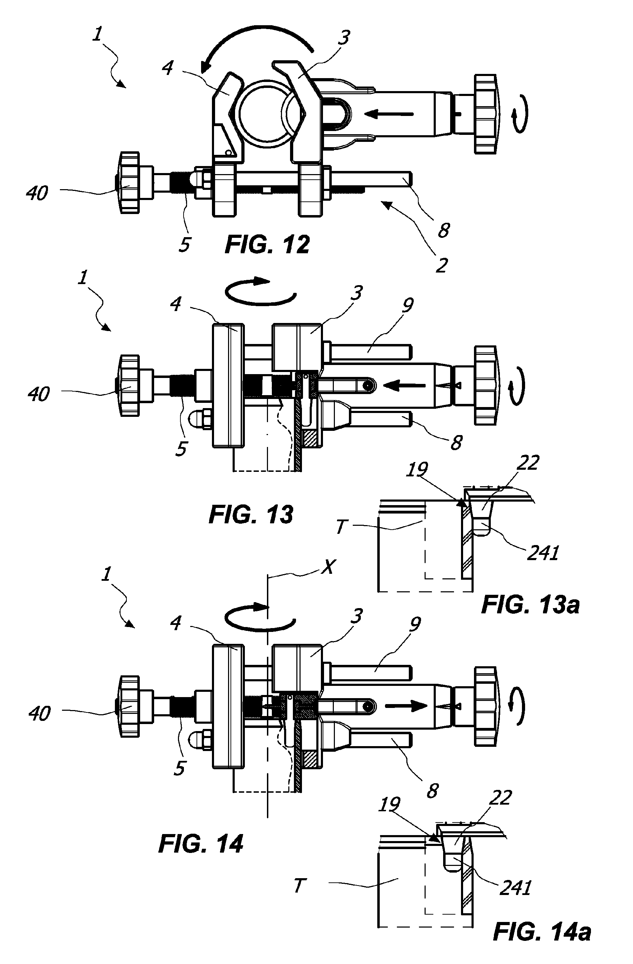

In any case, the blade elements **19, 19'** define an axis **X**' substantially parallel to the first axis **X,** and comprise an outer wall **22** provided with a first cutting edge **23** susceptible to come in contact with the pipe **T** in order to bevel the inner edge, as shown in FIGS. 14 and 14a, and with a second cutting edge **23'** suitable to countersink the outer edge of the pipe **T,** as shown in the FIGS. 13 and 13a. Advantageously, the first and second cutting edges **23, 23'** are reciprocally opposite with respect to a median plane **nM** interposed therebetween and passing through the axis **X'.**

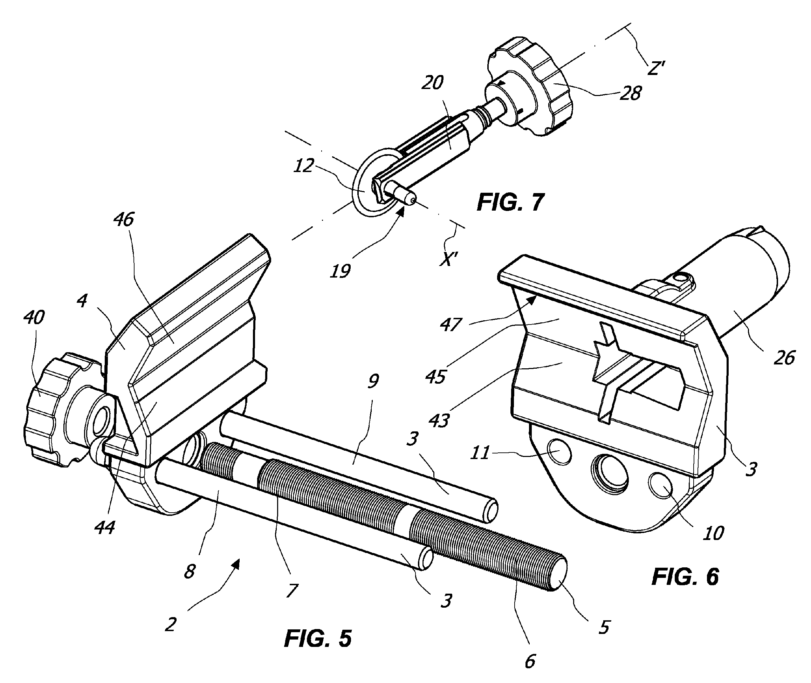

Advantageously, the elongated blade element 19, **19'** and the circular blade element **12** are susceptible to being mounted on a single blade holder element **20,** as particularly shown in the FIGS. 7 and 8. In particular, the circular blade elements **12** and the elongated element **19, 19'** can be secured on the blade holder element **20** and a user can move them by using the first means **14** for controlling the movement thereof in order to move them selectively and alternatively towards the respective working positions in contact with the pipe T.

To this end, the blade holder element **20** may have a rear portion **25** and may be slidingly mounted in a tubular portion **26** of the jaw element **3** in order to slide along the axis **Z',** substantially orthogonal to the first axis **X** defined by the pipe **T** when it is positioned in the seat **S.**

The first means **14** for controlling the movement of the circular blade elements **12** and of the elongated elements **19, 19'** include a first threaded element **27** screwed onto the blade holder element **20** in correspondence with the rear portion **25.** In particular, as shown in FIG.8, the rear portion **25** of the blade holder element **20** may include a female thread, while the first threaded element **27** may be a male threaded.

The first movement controlling means **14** may further comprise a first knob **28** unitary coupled with the first threaded element **27** and cooperating with the tubular portion **26** of the blade holder element **20** to allow a user to vary the distance from the pipe **T** of the circular blade elements **12** and of the elongated elements **19, 19'** along the third axis **Z'** as a function of the rotation of the first knob **28.**

The first movement controlling means **14** may further comprise a plurality of adjustment notches **29** associated with the first knob **28** and/or with the tubular portion **26,** in order to make easier a precise adjustment of the position of the circular blade elements **12** and of elongated elements **19, 19'** along the third axis **Z'.**

Advantageously, the blade holder element **20** has a substantially fork-shaped rear portion **41** in which the first circular blade element **12** is fastened during the rotation around a rotation axis **X'.** The rotation axis **X**' is substantially parallel to the first axis **X** defined by the pipe **T** mounted in the seat **S.**

The first circular blade element **12** comprises a passing-through hole **42** for housing a rotation pivot. Advantageously, as shown in the FIGS. 7 and 8, the rotation pivot of the first circular blade element **12** may be the same elongated blade element **19, 19',** so that the axis **X**' defined by the latter coincides with the rotation axis of the circular blade element **12.**

To this end, the elongated blade element **19, 19'** includes a rear coupling portion **21** to be coupled with the blade holder element **20** in correspondence with the fork-shaped rear portion **41** and an operative front portion **24** including the cutting edges **23, 23'.** The rear portion **21** of the elongated blade element **19, 19'** may be inserted into the hole **42** of the circular blade element **12,** in order to support the same during rotation.

The operative front portion **24** of the elongated blade element **19, 19'** may comprise a zone **240** proximal with respect to the rear coupling portion **21** and a zone **241** distal with respect to the rear coupling portion defining the front end of the blade element **19, 19'.** The cutting edges **23, 23'** can be placed in correspondence of the proximal area **240.**

In the FIGS. from 7 to 11 different embodiments of the second elongated blade element are shown.

The embodiments of the second blade element **19** shown in the FIGS. from 7 to 9a and in FIG. 11 are similar each other and include an outer wall **22** which defines the proximal zone **240** and further include a distal zone **241** having substantially hemispherical shape. Therefore, the cutting edges **23, 23'** can be placed in correspondence of the cylindrical wall **22.**

Such embodiment can be particularly useful for the multilayer pipes **T.** As shown in FIGS. from 12 to 14a, after the cutting of the pipe through the circular blade element **12,** it will be possible to countersink the inner edge through the cutting edge **23** and to chamfer the outer edge through the cutting edge **23'.** The rounded shape of the distal zone **241** makes such operations easier and allows to bore the pipe diameter after the cutting.

On the other hand, in the embodiment in FIG. 10, the second blade element **19'** has a knife- or wedge-shaped distal zone **241.**

Such embodiment may be particularly useful with the metal pipes **T.** In fact, after the cutting of the pipe by the circular blade element **12,** it is possible to carve the protective outer layer **E** by using the same circular blade element **12** and, subsequently, to remove it by using the knife- or wedge-shaped blade element **19'** shown in FIG. 10.

Advantageously, the substantially fork-shaped front portion **41** of the blade holder element **20** may include a couple of passing-through end holes **410** susceptible to house the coupling rear portion **21** of the elongated blade element **19, 19'** as shown in particular in FIG. 8.

Advantageously, removable blocking means of the elongated blade element **19, 19'** with respect to the blade holder element **20,** for example a pin **210** as shown in FIG. 8, may be provided. As an alternative, the removable blocking means may include a retaining ring, for example of the Seeger type, insertable in the annular seat **220** of the blade elements **19, 19'** shown respectively in the FIGS. 11 and 10.

The movable blocking of the elongated blade element **19, 19'** allows a simple and rapid replacement thereof.

In a preferred, not exclusive embodiment, the tool 1 may include one couple of elongated blade elements **19** and **19',** a first one **19** according to the embodiment shown in FIGs. from 7 to 9a or in FIG. 11 and a second one **19'** according to the embodiment shown in FIG. 10.

This allows to have an extremely versatile tool **1** suitable for each type of pipe **T,** both multilayer and metal ones. In fact, in the first case the embodiment of the elongated blade element **19** shown in FIGS. from 7 to 9a or in FIG. 11 is used, while in the second case it is used the embodiment of the elongated blade element **19'** shown in FIG. 10.

The two blade elements **19, 19'** can be rapidly mounted on the blade holder element **20** by simply acting on the pin **210** or on the retaining ring insertable into the seat **220.**

The jaw elements **3, 4** may conveniently have respective operative surfaces **43, 44** susceptible to come at least partially in contact with the outer surface E of the pipe T to retain it in the seat S during the working.

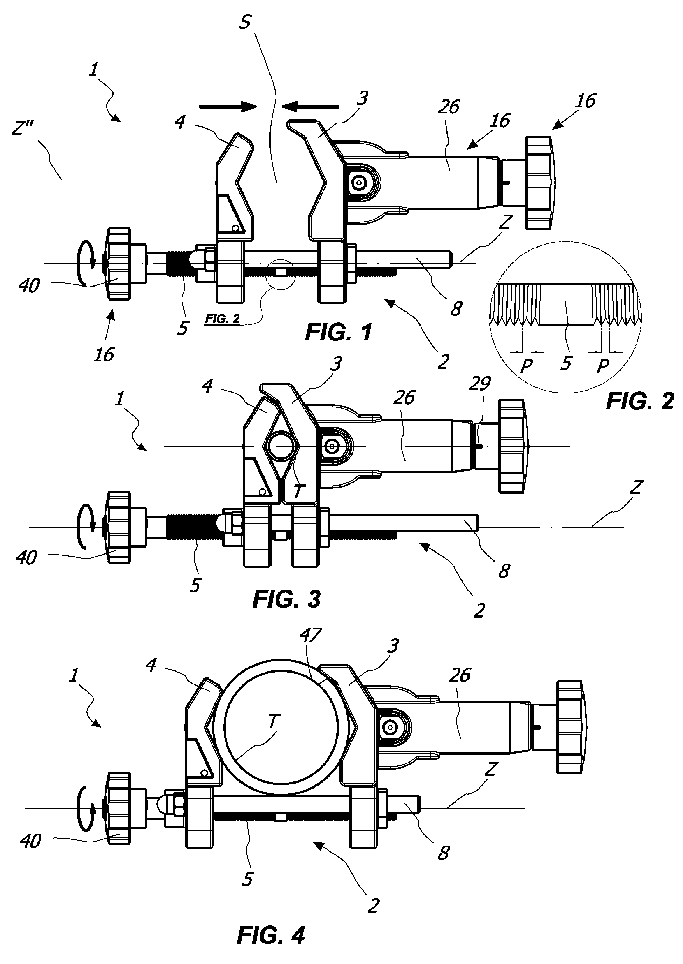

Advantageously, the operative surfaces **43, 44** may substantially be the same and co-extensive. On the other hand, as for example shown in FIG.4, FIG.5, FIG.6, the operative surfaces **43, 44** may have different sizes. In this case, the operative surfaces **43, 44** may have first surface portions **45, 46** being the same and co-extensive between them. However, the first surface portion **46** of the jaw element **4** defines the whole operative surface **44,** while the operative surface **43** of the jaw element **3** may have a second surface portion **47** extending from the first surface portion **45** in order to come in contact with the outer surface **E** of the pipe **T,** as shown in FIG.4.

This characteristic allows to make easier the rotation of the tool if the pipe T has a relatively high diameter.

In view of the foregoing description, it is self-evident that the invention fulfils the intended objects.

In particular, the tool **1** allows to work fast and in the correct way the edges of the end part **F** of a pipe **T** without the disadvantages typical of a hand-made working carried out with a great amount of tools.

The working of the edge by the tool **1** allows an easy and fast insertion of the pipe **T** into a fitting by preserving its integrity.

It is self-evident that the operator will be able to carry out all the operations described above by one single tool **1,** leading to great savings in terms of time and money.

Further, due to the particular configuration, the tool **1** occupies extremely little space and can be easily transported in a toolbox or the like.

Moreover, the tool **1** is extremely safe for the operator using it and this minimizes the risk of being cut or injured.

While the tool has been described with particular reference to the accompanying figures, the numerals referred to in the disclosure and claims are only used for the sake of a better intelligibility of the invention and shall not be intended to limit the claimed scope in any manner.

The tool of the invention is susceptible to many changes and variants, all falling within the inventive concept expressed in the annexed claims. All particulars may be replaced by other technically equivalent elements, and the materials may be different according to the needs, without departing from the scope of the invention.

## Claims

1. A tool for working the end **(F)** of a plumbing pipe **(T)** for the transport of fluids having a smooth surface, the pipe defining a first axis (**X**) and including at least one inner layer in direct contact with the fluid to be transported and at least one outer protective layer **(E),** the tool comprising:
- a support structure **(2)** defining a second axis **(Z);**
- at least one couple of substantially C-shaped jaw elements **(3, 4)** with reciprocally facing concavities to define a seat **(S)** for retaining the pipe **(T),** said jaw elements **(3, 4)** being mounted on said support structure **(2)** to slide along said second axis **(Z)** between a reciprocally proximal position in which they retain the pipe **(T)** in said seat **(S)** and a reciprocally distal position, in which the pipe **(T)** is freely removable from said seat **(S);**
- a first circular blade element **(12)** movably mounted on one of the jaw elements **(3, 4)** of said couple to move between a first rest position spaced apart from the pipe **(T)** retained in said seat **(S)** and a first working position in contact with the pipe **(T)** for cutting thereof by rotation of the tool about said first axis (**X**);
- a blade holder element **(20)** sliding along a third axis **(Z')** substantially parallel to said second axis **(Z)** and substantially orthogonal to said first axis (**X**), said first circular blade element **(12)** being mounted on said blade holder element **(20);**
wherein said one of the jaw elements **(3, 4)** of said couple comprises first means **(14)** for controlling the sliding of said blade holder element **(20)** along said third axis **(Z');**
wherein said blade holder element **(20)** further includes at least one second elongated blade element **(19, 19')** usable alternatively to said first circular blade element **(12),** said at least one second elongated blade element **(19, 19')** defining a fourth axis (**X'**) substantially parallel to said first axis (**X**) and substantially coinciding with the rotation axis of said first circular blade element (12), said at least one second elongated blade element **(19, 19')** including an outer wall **(22)** comprising a first cutting edge **(23)** susceptible to come into contact with the pipe **(T)** for beveling the inner edge thereof and a second cutting edge **(23')** susceptible to come into contact with the pipe **(T)** for countersinking the outer edge thereof, said first cutting edge **(23)** and second cutting edge **(23')** being reciprocally opposite with respect to a median plane **(nM)** interposed therebetween passing through said fourth axis (**X**').

2. Tool according to claim 1, wherein said at least one second elongated blade element **(19, 19')** includes a rear coupling portion **(21)** to be coupled with said blade holder element **(20)** and a front operative portion **(24)** including said first cutting edge **(23)** and second cutting edge **(23'),** said first circular blade element **(12)** being rotatably supported by said rear coupling portion **(21).**

3. Tool according to the preceding claim, wherein said blade holder element **(20)** includes a rear portion **(25)** operatively coupled with said means **(14)** for controlling the sliding thereof **(20)** and a front substantially fork-shaped portion **(41)** operatively coupled with said rear coupling portion **(21)** of at least one second elongated blade element **(19).**

4. Tool according to the preceding claim, wherein said front substantially fork-shaped portion **(41)** of said blade holder element **(20)** includes a pair of passing-through end holes **(410)** susceptible to house said rear coupling portion **(21)** of said at least one second elongated blade element **(19, 19'),** removable blocking means **(210)** of the latter **(19, 19')** with respect to the first **(20)** being provided.

5. Tool according to claim 2, 3 or 4, wherein said front operative portion **(24)** of said at least one second elongated blade element **(19, 19')** includes a proximal zone **(240)** with respect to said rear coupling portion **(21)** and a zone **(241)** distal from the latter **(21)** which defines the front end of said at least one second elongated blade element **(19, 19'),** said first cutting edge **(23)** and second cutting edge **(23')** being located at said proximal region (**240**).

6. Tool according to the preceding claim, wherein said front operative portion **(24)** of at least one second elongated blade element **(19, 19')** includes a cylindrical wall **(22)** defining said proximal zone **(240),** said distal zone **(241)** having a substantially hemispherical shape.

7. Tool according to the claim which precedes the preceding claim, wherein said distal zone **(241)** is knife- or wedge-shaped to allow a user to peel the at least one outer protective layer **(E)** from the pipe **(T)** for removing thereof.

8. Tool according to one or more of the preceding claims, wherein said support structure **(2)** comprises a threaded column **(5)** defining said second axis **(Z)** and having a first and a second portion **(6, 7)** with opposite thread of equal pitch **(P),** each of said jaw elements **(3, 4)** being operatively coupled with a respective portion **(6, 7)** of said threaded column (5) for allowing a user to move them **(3, 4)** between said reciprocally distal and proximal positions by rotation of said threaded column **(5)** around said second axis **(Z),** at least one torsion-preventing bar **(8, 9)** substantially parallel to said second axis **(Z)** operatively coupled with said jaw elements **(3, 4)** being further provided to prevent the mutual rotation thereof about said second axis **(Z)** upon the rotation of the tool about said first axis (**X**).

9. Tool according to one or more of the preceding claims, wherein said one of the jaw elements **(3, 4)** of said couple includes a first tubular portion **(26)** for slidably housing said rear portion **(25)** of said blade holder element **(20),** said means **(14)** for sliding control of said blade holder element **(20)** including:
- a first threaded element **(27)** defining said third axis **(Z')** coupled with said first threaded portion **(25)** of said blade holder element **(20);**
- a knob **(28)** unitary coupled with said first threaded element **(27)** to allow the sliding of said first blade holder element **(20)** upon the rotation of said fist knob **(28);**
- a plurality of first adjustment notches **(29)** associated with said knob **(28)** and to said first tubular portion **(26)** of said one of the jaw elements **(3, 4)** of said couple to allow a user to adjust the reciprocal distance of said pipe **(T)** and said first circular blade element and second elongated blade element **(12, 19, 19')** along said third axis **(Z')** upon the rotation of said knob **(28).**

10. Tool according to one or more of claims 1 to 5, 8 or 9, comprising at least one pair **(19, 19')** of second elongated blade elements to be alternately and removably coupled to said blade holder element **(20),** wherein a first of said pair of second elongated blade elements **(19)** is the second elongated blade element according to claim 6, and wherein a second of said pair of second elongated blade elements **(19')** is the second elongated blade element according to claim 7.
